# EUROPEAN PATENT SPECIFICATION

(11) **EP 4 202 000 B1**
(45) Date of publication and mention of the grant of the patent: **15.10.2025**
(21) Application number: 23157124.1
(22) Date of filing: 10.06.2019
(51) Int. Cl.: C09D 7/00, C09D 5/00

(54) **STRIP FREE FLOOR SYSTEM**
STREIFENFREIES FUSSBODENSYSTEM
SYSTÈME DE PLANCHER SANS BANDE

(30) Priority: 11.06.2018 US 201862683446 P; 07.06.2019 US 201916434857
(43) Date of publication of application: 28.06.2023
(62) Divisional of application: 19737935.7
(73) Proprietor: S.C. Johnson & Son, Inc., Racine, WI 53403 (US)
(72) Inventor: SAVAGLIO, Carmine, Kenosha, Wisconsin 53140 (US); COOK, Teresa L., Evanston, Illinois 60602 (US); KAY, Robert K. H., Racine, Wisconsin 53406 (US); LONGORIA, Ana F., Mount Pleasant, Wisconsin 53406 (US)
(74) Representative: Murgitroyd & Company

(56) References cited:
- WO-A1-2016/118315
- WO-A2-03/006734
- JP-A- 2009 233 667

## Description

### CROSS-REFERENCE TO RELATED APPLICATIONS

This application claims priority to and the benefit of U.S. Patent Application No. 16/434,857, filed on June 7, 2019, and to U.S. Patent Application No. 62/683,446, filed on June 11, 2018.

### BACKGROUND

In general, industrial flooring is typically composed of a vinyl composition tile (VCT), sheet vinyl, terrazzo, rubber, linoleum, honed marble or granite, and unglazed ceramic. These materials have proven to be highly popular flooring choices because of their durability and ease of maintenance. However, in order to sustain an aesthetically appealing and durable floor, these industrial flooring materials need to be cleaned often and properly maintained. For example, each of these materials requires a protective coating or floor finish that is designed to yield a high gloss after initial application and exceptional scratch, scuff, and/or chemical resistance.

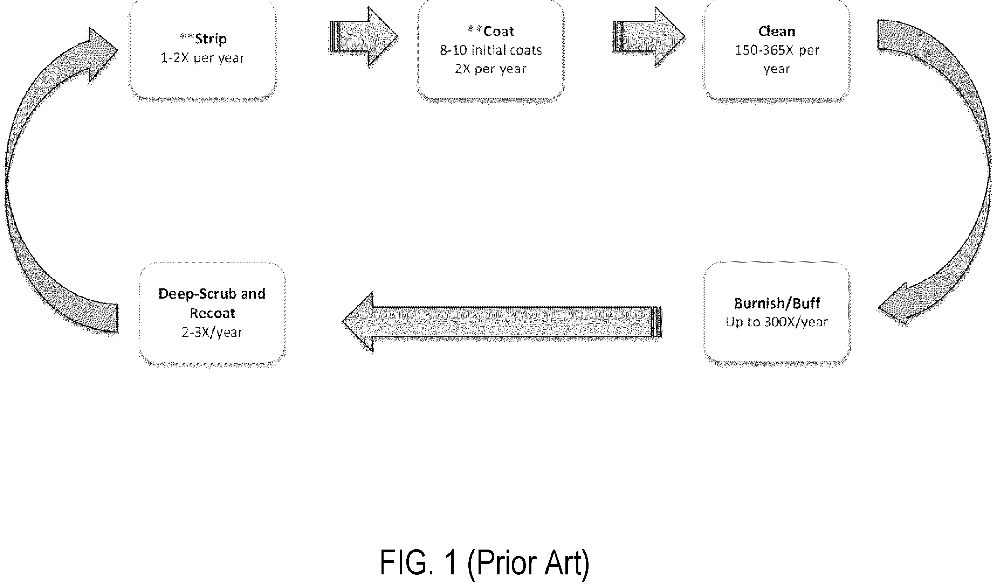

Dirt and debris are very abrasive when left on a floor surface. Constant foot traffic coupled with the abrasive materials leads to scratching/gouging of the floor and, as a result, the floor loses its gloss and overall visual appeal. To maintain the flooring, a conventional floor care process is often undertaken, such as the process depicted in FIG. 1 (Prior Art). The conventional floor care process is typically initiated once a floor has become sufficiently damaged. Signs of a sufficiently damaged floor may include when the floor finish has been worn down to the surface layer, when it is chipping or flaking, or when it is stained sufficiently where normal cleaning methods cannot remove it. At this time, the conventional floor care process can be initiated by "stripping" the floor. In this process, the floor finish is completely removed using a stripping solution in combination with a rotatable abrasive pad on a low speed machine (175-350 rpm). Following the removal, a new floor finish is then coated on the floor surface with approximately 4 or more initial coats, often applied using a mop and mop bucket approach.

A cleaning process is then typically performed daily or every other day using a spray cleaner or scrubbing solution to remove dirt and debris from the floor. In addition to cleaning, the floor is typically buffed to remove light scuffs and dirt from the surface. Buffing is typically performed using a nylon or natural hair pad and a low or high speed machine. The floor is also burnished on a daily basis to restore gloss to the floor finish. This is performed in a dry application using a high or ultrahigh speed machine (1000-3000 rpm) with the use of nylon and natural hair pads.

Periodically, a deep-scrub and recoat process may be performed to remove heavy scuff marks and mild wear and soiling from the finish. This process typically removes one to two coats of finish, and these coats are then replaced. This is most often performed using a low speed machine, spray solution, and scrubbing pad. The above described process may be repeated multiple times throughout the year.

The above described process is costly and labor intensive. Additionally, stripping chemicals possess a strong odor, are potentially hazardous materials (e.g., slip-fall hazard, corrosive to eye and skin), and may damage the floor and equipment used. Furthermore, stripping may be disruptive to business, where hospitals may have to close rooms or hallways for maintenance, and retail stores may have to close aisles for 24 hours.

JP2009233667A discloses a method of cleaning a hard floor surface comprising contacting the surface with a sequence of cleaning compositions. WO2016118315A1 discloses solutions and processes for removing substances (e.g. photoresists) from substrates such as semiconductor wafers and other electronic components.

Currently, there is a need in the art for the development of a new cleaning process that reduces the steps and cost to maintain an aesthetically appealing and durable floor.

### SUMMARY OF THE DISCLOSURE

In some aspects, the present disclosure addresses the aforementioned drawbacks by providing a floor protection and cleaning system (also referred to herein as a "strip free" system) that eliminates multiple steps from conventional floor cleaning processes, while maintaining aesthetically appealing and durable floors. As will be described, the present disclosure provides compositions and methods for advantageously removing the annual stripping step associated with conventional floor maintenance. This results in a significant reduction in material and labor costs for maintaining the durability and aesthetic appeal of industrial flooring. Furthermore, eliminating the annual stripping step reduces disruption of businesses, and reduces the amount of times workers may be exposed to potentially hazardous stripping chemicals. In some embodiments, the remover solution may advantageously include a low volatile organic compound (VOC) content or be substantially free of volatile organic compounds, thereby providing an environmentally-friendly product with reduced impact on air quality in the surrounding environment.

In one aspect, the present disclosure provides a composition for use in removing at least a portion of a coating from a surface. The composition comprises a first organic functional amine, a second organic functional amine; and a surfactant having formula (I): 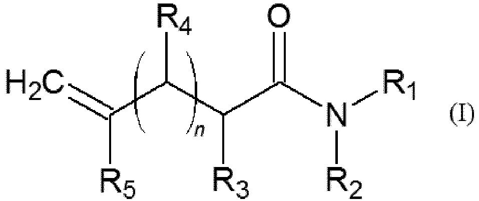 wherein n is 1 to 20, and R₁, R₂, R₃, R₄, and R₅ are each independently selected from hydrogen, alkyl, alkanol, and alkoxy-alkyl. In one version of the composition for use in removing at least a portion of a coating from a surface, the composition can comprise a second surfactant. The pH of the composition can be greater than 9. In another version of the composition, the pH can be between about 9 and about 12.2. The composition can have a volatile organic compound (VOC) content of less than 3% by weight. In another version of the composition, the volatile organic compound (VOC) content can be between about 0.1% to about 2.5%. In one version of the composition, n can be between 5 and 10. In another version of the composition, n can be 7. R₁ and R₂ are each independently selected from hydrogen, C₁-C₆-alkyl, C₁-C₆-alkanol, and C₁-C₆-alkoxy-C₁-C₃-alkyl. R₃, R₄, and R₅ are each independently selected from hydrogen, hydroxyl, C₁-C₆-alkyl, C₁-C₆-alkanol, and C₁-C₆-alkoxy-C₁-C₃-alkyl. The first organic functional amine is selected from a branched or unbranched amino-C₁-C₆-alkoxy-C₁-C₆-alkanol, amino-C₁-C₆-alkylamino-C₁-C₆-alkanol, amino-C₁-C₆-alkanol, C₁-C₆-alkylamino-C₁-C₆-alkylalkanol, and a 4- to 6-membered heterocycloalkyl that includes at least one nitrogen atom. In particular, the first functional amine can be selected from 2-(2-aminoethoxy)ethanol, ethanolamine, methylethanolamine, aminoethylpiperazine, aminoethylethanolamine, and ammonium. The first organic functional amine can comprise 2-(2-aminoethoxy)ethanol. The second organic functional amine is selected from a branched or unbranched amino-C₁-C₃-alkoxy-C₁-C₃-alkanol, amino-C₁-C₃-alkylamino-C₁-C₃-alkanol, amino-C₁-C₃-alkanol, and a C₁-C₃-alkylamino-C₁-C₃-alkylalkanol; the second amine can be selected from monoisopropanolamine. The surfactant can comprise N,N-dimethyl-9-decenamide. The composition comprising a first organic functional amine, a second organic functional amine, and a second surfactant, may further comprise a solvent selected from propylene glycol phenyl ether, diethylene glycol monohexyl ether, and benzyl alcohol. The second surfactant can be a non-ionic surfactant. A method of removing a coating from a surface includes applying the composition described above to a surface in an amount sufficient to remove at least a portion of the coating from the substrate.

In another aspect, the present disclosure provides a kit comprising the remover solution as described above, an abrasive pad, a container configured to contain a floor finish composition comprising at least one polymer emulsion, a first alkali soluble resin, a second alkali soluble resin, and a container configured to contain the remover solution.

In another aspect, the present disclosure describes a method of cleaning a substrate using a floor protection and cleaning system. The method includes the steps of conditioning and/or polishing a substrate, applying a floor finishing composition to coat at least a portion of the substrate, applying a remover solution to the floor finish composition, scrubbing the floor finish composition with a first abrasive pad to remove at least a portion of the floor finish composition, and cleaning the floor finish composition with a cleaning pad. The cleaning pad can be the first abrasive pad or a second different abrasive pad. The floor finish composition comprises at least one polymer emulsion, a first alkali soluble resin, and a second alkali soluble resin. The at least one polymer emulsion and the total amount of alkali soluble resin are present in a ratio of polymer emulsion to total alkali soluble resin, wherein the ratio is between about 2:1 and about 20:1. In the method, the remover solution comprises a first organic functional amine, a second organic functional amine and a surfactant having formula (I): 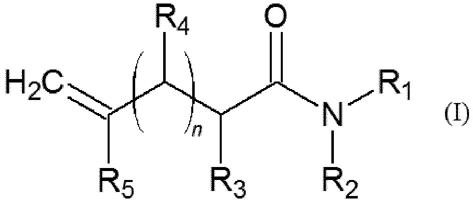 wherein in formula (I), n is 1 to 20, and R₁, R₂, R₃, R₄, and R₅ are each independently selected from hydrogen, alkyl, alkanol, and alkoxy-alkyl.

A version of the method of cleaning a substrate, can include a first abrasive pad comprising an abrasive element having about 800 or 1500 grit. At least one of the first alkali soluble resin and the second alkali soluble resin can comprise an acrylic polymer, and can have a molecular weight between 4000 and 7500. The surfactant can comprise N,N-dimethyl-9-decenamide. The second abrasive pad can comprise an abrasive element having about 3000 grit.

The foregoing and other aspects and advantages of the present disclosure will appear from the following description. In the description, reference is made to the accompanying drawings that form a part hereof, and in which there is shown by way of illustration a non-limiting example embodiment. This embodiment does not necessarily represent the full scope of the invention, however, and reference is therefore made to the entire disclosure herein for interpreting the scope of the invention.

### BRIEF DESCRIPTION OF THE DRAWINGS

The present invention will hereafter be described with reference to the accompanying drawings, wherein like reference numerals denote like elements.
FIG. 1 (Prior Art) is a schematic diagram illustrating a conventional floor cleaning process.
FIG. 2 is a schematic diagram of a strip free system in accordance with one aspect of the present disclosure.
FIG. 3 is a schematic diagram of a strip free process in accordance with one aspect of the present disclosure.
FIG. 4 shows the results of ASTM D4488 standard tests comparing a remover solution of the present disclosure with prior floor stripping and cleaning compositions.
FIG. 5 shows the results of modified ASTM D1792 tests comparing a remover solution of the present disclosure with prior floor stripping and cleaning compositions.

### DETAILED DESCRIPTION

Before any embodiments of the invention are explained in detail, it is to be understood that the invention is not limited in its application to the details of construction and the arrangement of components set forth in the following description or illustrated in the following drawings and/or examples. The invention is capable of other embodiments and of being practiced or of being carried out in various ways.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures. The figures, which are not necessarily to scale, depict selected embodiments and are not intended to limit the scope of embodiments of the invention. Skilled artisans may also recognize that the examples provided herein have many useful alternatives and fall within the scope of embodiments of the invention.

The conventional floor cleaning process described in FIG. 1 (Prior Art) is costly and labor intensive. Furthermore, the multiple stripping steps required in the conventional floor cleaning process can disrupt business (e.g., close hospital rooms or retail aisles) and may pose hazards to staff and infrastructure if proper application techniques are not followed. To overcome the aforementioned drawbacks, the present disclosure provides a floor protection and cleaning system 200 (also referred to herein as a "strip free" system 200) that eliminates multiple steps from the conventional floor cleaning process, while maintaining aesthetically appealing and durable floors.

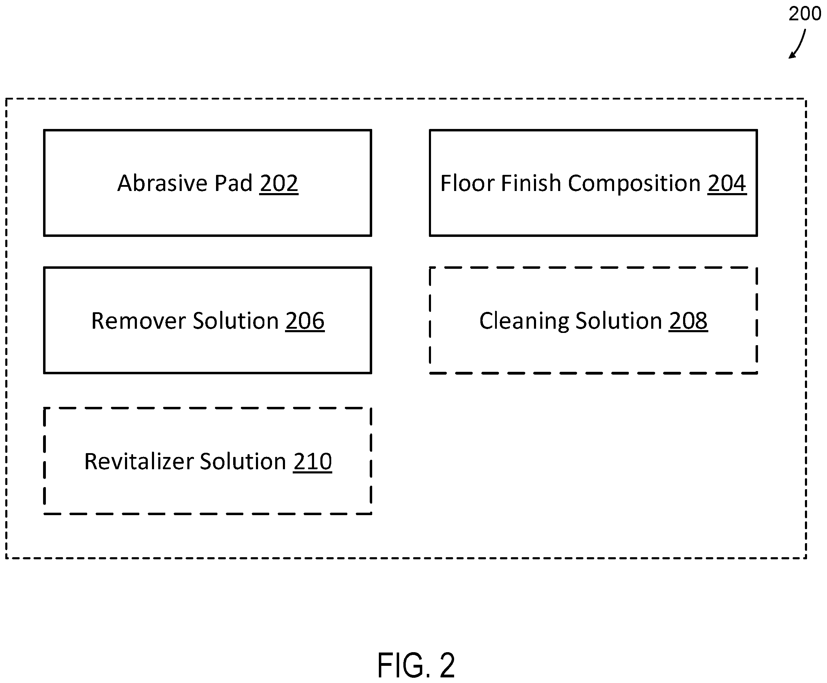

Referring to FIG. 2, a schematic diagram of the strip free system 200 is shown in accordance with one aspect of the present disclosure. In general, the strip free system 200 includes at least one abrasive pad 202 (which may have an example pad size of 13, 17, 20, or 27 inches), a floor finish composition 204, and a remover solution 206. The strip free system 200 may further optionally include a cleaning solution 208 and a revitalizer solution 210 (optional elements indicated by dotted lines). In one aspect, the strip free system 200 is optionally provided in an all-inclusive kit or package (optional element indicated by dotted line). For example, the strip free system 200 may be provided as individual elements, or in individual containers, such as providing the floor finish composition 204 in a floor finish container, providing the remover solution 206 in a remover container, and the abrasive pad 202 in a container or package. The abrasive pad 202 may be configured such that the pad is attachable and removable from commercially available floor buffers, burnishers, and polishers. As will be further described, the floor finish composition 204 and remover solution 206 have been optimized to reduce the amount of steps required in the conventional floor cleaning process, while maintaining desirable performance metrics, such as high gloss, chemical durability, abrasion resistance and the like. In addition, the abrasive power of the pads (e.g., 800 or 1500 grit and 3000 grit) can be selected to maintain desirable performance metrics, such as high gloss.

In some aspects, the abrasive pad 202 includes a plurality of fibers, a plurality of abrasive particles, a binder, and a lubricant. The fibers may comprise nylon. The abrasive particles may comprise silicon carbide, and may be adhered to a surface on the pad using the binder. Suitable binders include phenolic resins. In some aspects, the lubricant is a silicone lubricant and is present in the pad.

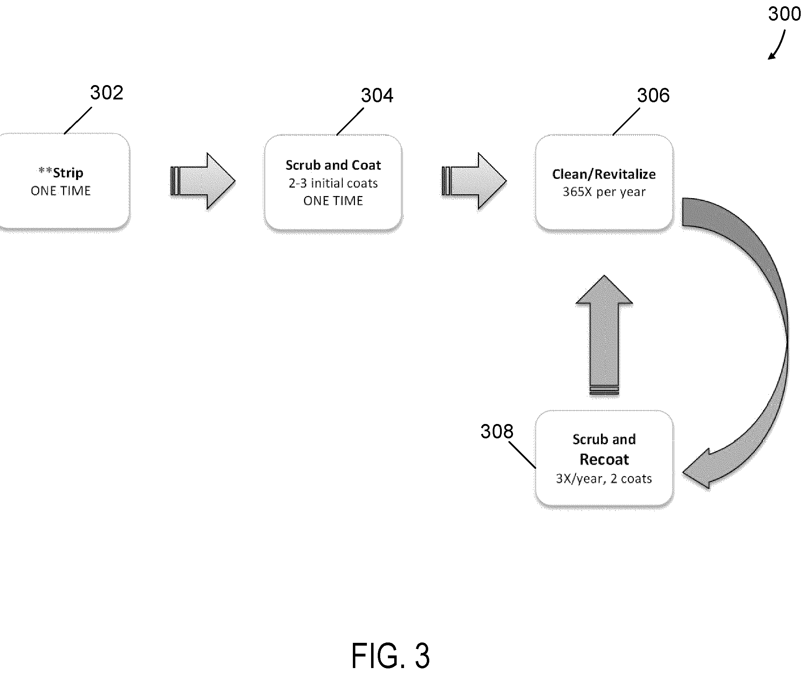

Referring to FIG. 3, a schematic illustration is shown to illustrate a strip free process 300 that is in accordance with one aspect of the present disclosure. Unlike the conventional floor maintenance process described in FIG. 1 (Prior Art), which requires multiple stripping and coating applications throughout the year, the strip free process 300 includes a single stripping step 302 to remove an existing floor finish composition (or at least partially remove), and a single initial wet cleaning step 304 to apply a floor finish composition 204. For example, in one non-limiting example version of the process, after the initial stripping step 302, the surface of the floor is then conditioned (e.g. smoothed) by applying a solution to the floor surface and cleaning the surface using an initial abrasive pad 202 coupled to a floor cleaning machine, such as a low speed rotary machine (e.g., 150-600 rpm). Suitable solutions for use in step 304 may include a cleaning solution (e.g., neutral, alkaline, or acidic) or a remover solution 206. The initial abrasive pad 202 may have a grit that ranges between approximately 500 and 3000 and, in some aspects, the initial abrasive pad 202 may have a grit of approximately 800 or 1500. After the floor surface is conditioned, a second abrasive pad coupled to a floor cleaning machine, such as a high speed burnishing machine (e.g., 700 rpm or greater), may be used to polish the surface until a desired gloss is achieved. A floor finish composition 204 is then applied to the floor surface. In another non-limiting example version of the process, after the initial stripping step 302, an abrasive pad coupled to a floor cleaning machine, such as a high speed burnishing machine (e.g., 700 rpm or greater), may be used to polish the surface until a desired gloss is achieved. A floor finish composition 204 is then applied to the floor surface. In some aspects, the floor finish composition 204 is applied to the floor surface in a single initial coat, or in two or more initial coats, or in three or more initial coats, or in four or more initial coats. In some aspects, the floor finish composition 204 is applied to the floor surface in two to three initial coats.

As indicated by process block 306, the floor finish composition 204 is then maintained by regularly cleaning and/or revitalizing the floor finish composition 204, for example, by regularly removing dirt and debris from the floor surface. In some aspects, step 306 includes applying a cleaning solution (e.g., neutral, alkaline, or acidic) to the floor finish composition 204 and scrubbing the surface, for example, using a mop or an abrasive pad 202 coupled to a floor cleaning machine. Occasionally a remover solution 206 is applied to remove at least a portion of the floor finish composition 204 during the cleaning and revitalizing step 306. Suitable abrasive pads 202 for use during the cleaning and revitalizing step 306 may have a grit between 500-3000.

Overtime, the floor finish composition 204 may become susceptible to heavy abrasions and/or stains. The heavy abrasions and/or stains may be removed by scrubbing and re-coating the floor finish composition 204, as indicated by process block 308. In some aspects, step 308 includes applying a remover solution 206 and scrubbing/cleaning the floor finish composition 204 to remove at least a portion of the floor finish composition 204. Scrubbing/cleaning the floor surface may include using an abrasive pad 202 coupled to a floor cleaning machine. Suitable abrasive pad 202s for use during the scrubbing/cleaning step may have a grit between 500-3000. After a portion of the floor finish composition 204 has been removed, one or more new coats of the floor finish composition 204 may be applied to the floor surface. In some aspects, the number of re-coats includes a single coat of the floor finish composition 204. In other aspects, the number of re-coats of the floor finish composition includes two coats, or three coats, or four coats. Process step 308 may be repeated a number of times throughout a year, for example, the step of scrubbing/cleaning the floor finish composition 204 and re-coating the floor surface may be performed one time a year, or two times a year, or three times a year, or four times a year, or five times a year.

Advantageously, by using the method 300 in combination with the floor finish composition 204 and remover solution 206 of the present disclosure, the process step of annually stripping the floor finish composition may be eliminated. This results in a significant reduction in material and labor costs for maintaining the durability and aesthetic appeal of industrial flooring. Furthermore, eliminating the annual stripping step reduces disruption of businesses, and reduces the amount of times workers may be exposed to potentially hazardous stripping chemicals.

Before turning to the description of the abrasive pad 202, the floor finish composition 204, the remover solution 206, reference will be made to a number of terms that may be defined to have the following meanings and definitions:
In this application, unless otherwise clear from context, the term "a," "and," and "the" may be understood to include plural forms unless the context clearly dictates otherwise (e.g., these terms may be equated to "at least one"). As used herein, the term "or" may be understood to mean "and/or," unless the context clearly dictates otherwise.

As used in this application, the terms "about" and "approximately" may be used as equivalents. Any numerals used in this application with or without about/approximately are meant to cover any normal fluctuations appreciated by one of ordinary skill in the relevant art. In certain embodiments, the terms "approximately" or "about" refer to a range of values that fall within 25%, 20%, 19%, 18%, 17%, 16%, 15%, 14%, 13%, 12%, 11%, 10%, 9%, 8%, 7%, 6%, 5%, 4%, 3%, 2%, 1%, or less than (or greater than) the stated reference value unless otherwise stated or otherwise evident from the context. In certain embodiments, the term "portion" refers to greater than 0% up to about 100% or 100%.

As used in this application, the term "alkyl" may refer to a linear or branched-chain saturated hydrocarbyl substituent (i.e., a substituent obtained from a hydrocarbon by removal of a hydrogen). In some aspects, the straight or branched hydrocarbyl substituent is a 1-12, 1-10, or 1-6 carbon atoms, referred to herein as C₁-C₁₂ alkyl, C₁-C₁₀-alkyl, and C₁-C₆-alkyl, respectively. For example, C₁-C₆ alkyl includes, but is not limited to, methyl ethyl, propyl, isopropyl, butyl, isobutyl, sec-butyl, tert-butyl, pentyl, isopentyl, hexyl, etc. Other alkyl groups include, but are not limited to heptyl, octyl, nonyl, decyl, etc. Alkyl can include any number of carbons, such as 1-2, 1-3, 1-4, 1-5, 1-6, 1-7, 1-8, 1-9, 1-10, 1-11, 1-12, 2-3, 2-4, 2-5, 2-6, 3-4, 3-5, 3-6, 4-5, 4-6 and 5-6.

The term "alkylene" refers to a diradical of an alkane. An exemplary alkylene group is - CH₂CH₂-. The term "alkenyl" as used herein refers to an unsaturated straight or branched hydrocarbon having at least one carbon-carbon double bond, such as a straight or branched group of 2-12, 2-10, or 2-6 carbon atoms, referred to herein as C₂-C₁₂-alkenyl, C₂-C₁₀-alkenyl, and C₂-C₆-alkenyl, respectively.

The term "alkanol" may refer to a linear or branched-chain saturated hydrocarbyl substituent attached to a hydroxyl (OH) group (i.e., a substituent obtained from a hydrocarbon by removal of a hydrogen and the addition of at least one hydroxyl group attached to at least one carbon atom in the hydrocarbon). In one aspect, the alkyl substituent contains one to six carbon atoms. Non-limiting examples of such substituents include methanol, ethanol, propanol, (including n-propanol and isopropanol), butanol (including n-butanol, isobutanol, sec-butanol and tert-butanol), pentanol, isoamyl alcohol, hexanol and the like.

The term "alkoxy" may refer to a linear or branched-chain saturated hydrocarbyl substituent attached to an oxygen radical (i.e., a substituent obtained from a hydrocarbon alcohol by removal of the hydrogen from the OH). In one aspect, containing from one to six carbon atoms. Non-limiting examples of such substituents include methoxy, ethoxy, propoxy (including n-propoxy and isopropoxy), butoxy (including n-butoxy, isobutoxy, sec-butoxy and tert-butoxy), pentoxy, hexoxy and the like.

The term "alkylamino" as used herein means an alkyl group, as defined herein, appended to the parent molecular moiety through an NH group. Representative examples of alkylamino include, but are not limited to, methylamino, ethylamino, isopropylamino, and butylamino.

The term "amino" as used herein means an -NH₂ group. The terms "amine" and "amino" are art-recognized and refer to both unsubstituted and substituted amines, wherein substituents may include, for example, alkyl, cycloalkyl, heterocyclyl, alkenyl, and aryl.

The term "carbonyl" as used herein refers to the radical -C(O)-. The term "carboxamido" as used herein refers to the radical -C(O)NRR', where R and R' may be the same or different. R and R' may be independently alkyl, aryl, arylalkyl, cycloalkyl, formyl, haloalkyl, heteroaryl, or heterocyclyl.

The term "aryl" is art-recognized and refers to a carbocyclic aromatic group. Representative aryl groups include phenyl, naphthyl, anthracenyl, and the like. The term "aryl" includes polycyclic ring systems having two or more carbocyclic rings in which two or more carbons are common to two adjoining rings (the rings are "fused rings") wherein at least one of the rings is aromatic and, e.g., the other ring(s) may be cycloalkyls, cycloalkenyls, cycloalkynyls, and/or aryls. Unless specified otherwise, the aromatic ring may be substituted at one or more ring positions with, for example, halogen, azide, alkyl, aralkyl, alkenyl, alkynyl, cycloalkyl, hydroxyl, alkoxyl, amino, nitro, sulfhydryl, imino, amido, carboxylic acid, -C(O)alkyl, -CO₂alkyl, carbonyl, carboxyl, alkylthio, sulfonyl, sulfonamido, sulfonamide, ketone, aldehyde, ester, heterocyclyl, aryl or heteroaryl moieties, -CF3, -CN, or the like. In certain embodiments, the aromatic ring is substituted at one or more ring positions with halogen, alkyl, hydroxyl, or alkoxyl. In certain other embodiments, the aromatic ring is not substituted, i.e., it is unsubstituted. In certain embodiments, the aryl group is a 6-10 membered ring structure.

The term "heteroaryl" refers to an aromatic ring structure containing the specified number of ring atoms in which at least one of the ring atoms is a heteroatom (i.e., oxygen, nitrogen, or sulfur), with the remaining ring atoms being independently selected from the group consisting of carbon, oxygen, nitrogen, and sulfur. Suitable heteroaryl substituents include 5- and 6-membered heteroaryl substituents such as triazolyl, imidazolyl, furanyl, thiophenyl, pyridyl, pryrazyl, pyrimidinyl, and the like. The heteroaryl can be further substituted as defined herein.

The term "heterocycloalkyl" may refer to a substituent obtained by removing a hydrogen from a saturated or partially saturated ring structure containing a total of the specified number of atoms, such as 4 to 6 ring atoms, wherein at least one of the ring atoms is a heteroatom (i.e., oxygen, nitrogen, or sulfur), with the remaining ring atoms being independently selected from the group consisting of carbon, oxygen, nitrogen, and sulfur.

The term "hydroxy" or "hydroxyl" refers to -OH. When used in combination with another term(s), the prefix "hydroxy" indicates that the substituent to which the prefix is attached is substituted with one or more hydroxy substituents. Compounds bearing a carbon to which one or more hydroxy substituents include, for example, alcohols, enols and phenol.

In some instances, the number of carbon atoms in a hydrocarbyl substituent (i.e., alkyl, cycloalkyl, etc.) is indicated by the prefix "Cₓ₋C_{y-}" or "C_{x-y}", wherein x is the minimum and y is the maximum number of carbon atoms in the substituent. Thus, for example, "C₁-C₆-alkyl" or "C₁₋₆ alkyl" refers to an alkyl substituent containing from 1 to 6 carbon atoms, and C₃-C₆cycloalkyl or C₃₋₆-cycloalkyl refers to saturated cycloalkyl group containing from 3 to 6 carbon ring atoms.

The term "weight percent," "wt-%," "percent by weight," "% by weight," and variations thereof, as used herein, refer to the concentration of a substance as the weight of that substance divided by the total weight, for example, of the composition or of a particular component of the composition, and multiplied by 100. It is understood that, as used herein, "percent," "%," and the like may be synonymous with "weight percent," "wt-%."

The compositions described herein include water. The term "water" may include, without limitation, deionized (DI) or any other water suitable for the composition.

The term "volatile organic compound" ("VOC"), as defined by the U.S. Environmental Protection Agency in 40 C.F.R. § 51.100(s), refers to any compound of carbon, excluding carbon monoxide, carbon dioxide, carbonic acid, metallic carbides or carbonates, and ammonium carbonate, which participates in atmospheric photochemical reactions. Typically, volatile organic compounds have a vapor pressure equal to or greater than 0.1 mm Hg. The volatile organic compound content (w/w) can be measured using techniques known to a person of ordinary skill in the art, such as using a lower explosion limit (LEL) detector (e.g., a flame ionization detector), a solid-phase microextraction (SPME) technique, a direct injection mass spectrometer, among others, to measure the total weight of volatile organic compounds in a sample.

### Floor Finish Composition:

In one aspect, the present disclosure is directed to a floor finish composition 204. The floor finish composition 204 of the present disclosure may provide a protective coating for a substrate, such as an industrial flooring, and may provide excellent abrasion and/or chemical resistance, as well as high gloss. Furthermore, the floor finish composition 204 may be easily and selectively removed from the substrate using the remover solution 206 without compromising durability. In general, the floor finish composition 204 comprises one or more polymers (e.g., at least one polymer emulsion and at least one alkali soluble resin), a plasticizer, and a solvent. In some forms, the floor finish composition 204 may further comprise a wax, surfactant, and fragrance.

In one aspect, the one or more polymers may provide the floor finish composition 204 with structural performance attributes. The one or more polymers may also impart performance attributes to the floor finish composition 204, such as wet and dry adhesion, leveling, early water resistance, corrosion and chemical resistance, hardness, inter-coat adhesion, gloss, flexibility, removability, and exterior durability. In some embodiments, the total amount of polymer present in the floor finish composition 204 may range between about 30% and about 65% (w/w), about 35% and about 55%, or about 40% and about 50%. In some aspects, the one or more polymers are present in the floor finish composition 204 an amount of about 30% (w/w), or about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, or about 65% (w/w). In some forms, the one or more polymers are present in the floor finish composition 204 an amount of about 50% to about 80%, or more specifically about 55% to about 75% based on a percent solids.

### Polymer Emulsions:

In some aspects, the one or more polymers in the floor finish composition 204 includes a polymer emulsion that may act as a binder or film forming agent. In some embodiments, presence or amount the polymer emulsion impacts one or more properties of the composition, such as leveling, wear resistance, impact resistance, and gloss of the floor finish composition 204.

In some aspects, the polymer emulsion may include an acrylic polymer emulsion. Suitable acrylic polymers may include, but are not limited to polymers, copolymers, or terpolymers of acrylic acid or methacrylic acid with esters of acrylic or methacrylic acid, hydroxyethyl methacrylate methacrylonitrile, and acrylonitrile. Additional monomers may also be used. For example, additional monomers may include methyl methacrylate, butyl acrylate, ethyl acrylate, and 2-ethylhexyl acrylate. Further, additional unsaturated acid monomers may be substituted in part for the methacrylic acid. Suitable unsaturated acid monomers may include, but are not limited to, maleic acid, crotonic acid, fumaric acid, and itaconic acid.

The polymer emulsion may also comprise a vinyl component. The vinyl component may be a styrene or a monoalkenyl aromatic monomer such as methyl styrene or tertiary butyl styrene. In a specific embodiment, the acrylic polymer emulsion comprises a styrene.

As mentioned, the polymer emulsion may also be provided as a copolymer. Suitable copolymers include, but are not limited to, styrene/butyl acrylate/methacrylic acid, styrene/ethyl acrylate/methacrylic acid, styrene/butyl acrylate/ethyl acrylate acid, and styrene/butyl acrylate acrylate/ethyl methacrylic acid.

Other suitable polymer emulsions include, but are not limited to, styrene/butyl acrylate/acrylate/acrylic acid, styrene/ethyl acrylate/acrylic acid, and methyl/styrene styrene/butyl acrylate/ethyl acrylate/methacrylic acid/acrylic acid.

In another aspect, the polymer is acid functional and is provided as a zinc cross-linked styrene-acrylic copolymer emulsion.

Non-limiting examples of commercially available polymer emulsions that may find use herein include DURAPLUS^{™} 3, DURAPLUS^{™} 3LO, RHOPLEX^{™} 1531C, and RHOPLEX^{™} E-3392 from The Dow Chemical Company, Mor-Glo 8 from OMNOVA Solutions, and Joncryl^{®} 8615 from BASF Corporation.

In some embodiments, the polymer emulsion may be free or substantially free of alkyl phenol ethoxylates (APE) and volatile organic compounds. In some embodiments, the polymer emulsion may have less than about 3% (w/w) volatile organic compounds or APE compounds, and in some aspects, less than about 2%, or about 1%, or about 0.5% (w/w) volatile organic compounds or APE compounds.

The polymer emulsion may be present in the floor finish composition 204 in an amount of about 35% to about 55%, or more specifically about 40% to about 50% based on a total weight of the composition (w/w). In some embodiments, the polymer emulsion is present in the floor finish composition 204 in an amount of about 35% (w/w), or about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, or about 55% (w/w). In some forms, the one or more polymer emulsion is present in the floor finish composition 204 in an amount of about 55% to about 75%, or more specifically about 60% to about 70%, based on a percent solids.

### Alkali Soluble Resin

In one aspect, the one or more polymer in the floor finish composition 204 may comprise at least one alkali soluble resin. The presence or amount of alkali soluble resin may impact one or more performance characteristics in the floor finish composition 204, such as ease of removal by a solution (e.g., remover solution 206, cleaner solution, alkaline solution), corrosion and chemical resistance, hardness, adhesion, gloss, and durability. In some aspects, the one or more alkali soluble resin may influence the coatability or spreadability of the floor finishing composition 204 onto a surface. For example, one of the challenges associated with conventional floor finish compositions is the tendency for the composition to clump or adhere to the pad or mop being used to spread the composition over the surface. It is a recognition of the present disclosure that material properties of the alkali soluble resin may be tuned or leveraged to prevent undesirable results associated with deposition of the floor finish composition on the surface, such as clumping and adhesion to a pad or mop.

In some aspects, inclusion of an alkali soluble resin in the floor finish composition 204 may improve the material properties of the floor finish composition 204 relevant to coating or spreading the composition such that it is in a form that is resistant to clumping or adhering to the pad or mop. In some aspects, the floor finish compositions 204 of the present disclosure have reduced drag during deposition or application over a surface, thereby preventing the formation of clumps.

In one aspect, a molecular weight or average molecular weight of alkali soluble resin(s) may influence the floor finish composition 204 in accordance with the present disclosure to achieve improved performance properties, such as clumping resistance and reduced drag during deposition. In some aspects, the molecular weight of the alkali soluble resin may be selected to range between about 3000 and about 7500, and more particularly between 4500 and 7000, and even more particularly between 5000 and 6500.

In some aspects, the alkali soluble resin may have a molecular weight of about 3000, or about 3100, about 3200, about 3300, about 3400, about 3500, about 3600, about 3700, about 3800, about 3900, about 4000, about 4100, about 4200, about 4300, about 4400, about 4500, about 4600, about 4700, about 4800, about 4900, about 5000, about 5100, about 5200, about 5300, about 5400, about 5500, about 5600, about 5700, about 5800, about 5900, about 6000, about 6100, about 6200, about 6300, about 6400, about 6500, about 6600, about 6700, about 6800, or about 7000. The aforementioned molecular weights may be number average molecular weights (Mn), weight average molecular weights (Mw), Z-average molecular weights (Mz), or viscosity average molecular weights (Mv) of the alkali soluble resin(s).

In some aspects, an acid number of the alkali soluble resin may influence the floor finish composition 204 in accordance with the present disclosure to achieve improved performance properties, such as clumping resistance and reduced drag during deposition. In some forms, suitable alkali soluble resins may include an acid number between 180 and 260, and more particularly between 200 and 240. In some aspects, at least one alkali soluble resin in the floor finish composition 204 may have an acid number of about 180, or about 190, about 200, about 210, about 220, about 230, about 240, about 250, about 260. The acid number is a measure of the number of carboxylic groups in a chemical compound, and may be a useful metric in predicting the solubility of the resin in water or an alkali solution. The acid number may be determined using various methods known to those skilled in the art, for example, the acid number may correlate to an amount of potassium hydroxide for neutralizing one gram of the alkali soluble resin, as would be readily understood by those skilled in the art.

In some aspects, the glass transition temperature of the alkali soluble resin may influence the floor finish composition 204 in accordance with the present disclosure to achieve improve performance properties, such as clumping resistance and reduced drag during deposition. In some forms, suitable alkali soluble resins may have a glass transition temperature (Tg) between about 80 and about 120°C, and even more particularly between 90 and 110°C. In some aspects, at least one of the alkali soluble resins in the floor finish composition 204 has a glass transition temperature of about 80 °C, or about 85, about 90, about 95, about 100, about 105, about 110, about 115, or about 120 °C.

In some aspects, suitable alkali soluble resins may include natural resins or synthetic resins, including but not limited to acrylic polymers and styrene/acrylic polymers or condensation polymers including polyester polymers, polyurethane polymers, polyether polymers, polyaldehyde polymers, polycarbonates and polyamides.

Non-limiting examples of commercially available alkali soluble resins that may find use herein include for example, Joncryl^{®} ECO 75 from BASF Corporation, Joncryl^{®} ECO 675 from BASF Corporation, and RHOPLEX ^{™} E-1531C from The Dow Chemical Company.

In some aspects, the total amount of alkali soluble resin in the floor finish composition 204 may range between about 0.1% and 15% (w/w), or more. In some aspects, the total amount of alkali soluble resin is about 1% (w/w), or about 2%, about 3%, about 4%, about 5%, about 6%, about 7%, about 8%, about 9%, about 10%, about 11%, about 12%, about 13%, about 14%, or about 15% (w/w). In some aspects, the total amount of alkali soluble resin in the floor finish composition 204 is less than 10% (w/w), or less than 9%, less than 8%, less than 7%, less than 6%, less than 5%, less than 4%, less than 3%, less than 2%, or less than 1%, or less.

In some aspects, the floor finish composition 204 includes a first alkali soluble resin and a second alkali soluble resin. In some aspects, it may be beneficial for the floor finish composition 204 to have the first alkali soluble resin differ from the second alkali soluble resin in at least one property characteristic, such as a molecular weight, an acid number, and glass transition temperature, among others. In some aspects, a ratio of first alkali soluble resin to second alkali soluble resin may be used to modulate the leveling, anti-clumping, and reduced drag characteristics of the floor finish composition 204.

In one non-limiting example, the first alkali soluble resin is Joncryl^{®} ECO 75, and the second alkali soluble resin is RHOPLEX ^{™} E-1531C.

In some aspects, the floor finish composition 204 includes a first alkali soluble resin and a second alkali soluble resin in a ratio between about 5:1 and about 1:5 by weight. In some aspects, the ratio of the first alkali soluble resin to the second alkali soluble resin is about 5:1, or about 4: 1, about 3:1, about 2:1, or about 1:1 by weight.

In some aspects, the total weight of the first alkali soluble resin in the floor finish composition 204 ranges between 0.1% and 7.5% (w/w). In some aspects the total weight of the first alkali soluble resin in the floor finish composition 204 is about 0.1% (w/w), or about 1%, about 1.5, about 2%, about 2.5, about 3%, about 3.5, about 4%, about 4.5, about 5%, about 5.5, about 6%, about 6.5, about 7%, or about 7.5% (w/w). In some aspects, the total weight of the second alkali soluble resin in the floor finish composition 204 ranges between 0.1% and 7.5% (w/w). In some aspects the total weight of the second alkali soluble resin the floor finish composition 204 is about 0.1% (w/w), or about 1%, about 1.5, about 2%, about 2.5, about 3%, about 3.5, about 4%, about 4.5, about 5%, about 5.5, about 6%, about 6.5, about 7%, or about 7.5% (w/w).

In some aspects, the alkali soluble resin may have a low volatile organic compounds content. For example the alkali soluble resin may have a VOC content of less than 3%, less than 2%, less than 1%, less than 0.5%, or may be free of VOCs.

In some aspects, the floor finish compositions 204 of the present disclosure comprise a ratio of polymer emulsion to total alkali soluble resin. The ratio of polymer emulsion to total alkali soluble resin may facilitate removal of the composition from a surface, while maintaining a desirable abrasion resistance and/or chemical resistance. The floor finish composition 204 may include a ratio of polymer emulsion to total alkali soluble resin in a weight ratio between about 2:1 and about 20:1, or more specifically in a weight ratio between about 3:1 to about 15:1. In some aspects, the weight ratio of total polymer emulsion to total alkali soluble resin is about 2:1, or about 3:1, about 4:1, about 5:1, about 6:1, about 7:1, about 8:1, about 9: 1, about 10:1, about 11: 1, about 12: 1, about 13:1, about 14:1, about 15:1, about 16:1, about 17:1, about 18:1, about 19:1, about 20:1.

In some aspects, the floor finish composition 204 may include one or more plasticizers. The plasticizer may increase the plasticity or fluidity of the floor finish composition 204. As a result, a relatively high level of plasticizer may result in a soft and weak film or coating. Alternatively, a relatively low level of plasticizer may create a brittle coating. Furthermore, the plasticizer may also influence the removability of the floor finish composition 204 from the substrate, as well as the durability, chemical and abrasion resistance.

In some aspects, the floor finish composition 204 includes one or more plasticizers in a weight percent of about 0.1% to 10% (w/w), and more particularly in a weight percent of about 1% and 5% (w/w). In some aspects, the floor finish composition 204 includes a plasticizer in an amount of about 0.1% (w/w), or about 1%, about 1.5%, about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, or about 10%. In some aspects, the plasticizer may be present in the floor finish composition 204 in an amount of about 8% to about 18% based on percent solids. In other forms, the plasticizer may be present in an amount of about 10% to about 30% based on total polymer solids, wherein the total polymer solids is defined by the total amount polymer emulsion solids and alkali soluble resin solids.

Suitable plasticizers may include benzoate esters, tributoxyethyl phosphate, and trimethyl pentanediol diisobutyrate. Other suitable plasticizers may also include glycol ether dibenzoates based on ethylene or propylene glycols including, but not limited to, propylene glycol dibenzoate, dipropylene glycol dibenzoate, polypropylene glycol dibenzoate, ethylene glycol dibenzoate, diethylene glycol dibenzoate, polyethylene glycol dibenzoate, neopentyl glycol dibenzoate, and the like, as well as isodecyl benzoate, dipropylene glycol monomethyl ether benzoate, 2,2,4-trimethyl-1,3-pentanediol diisobutyrate and combinations thereof.

In one embodiment, the at least one plasticizer comprises a benzoate ester plasticizer. In a particular embodiment, the benzoate ester plasticizer has a formula PhCO(O)R₁, where Ph represents a phenyl radical and R₁ represents a linear or branched hydrocarbon radical comprising six or less carbon atoms.

In one embodiment, the benzoate ester plasticizer is a diethylene glycol dibenzoate. For example, the benzoate ester plasticizer may be Benzoflex^{™} 2088, from the Eastman Chemical Company.

Suitable benzoate ester plasticizers may further include a monobenzoate. The monobenzoate may be present in the composition when the monobenzoate is not completely converted to dibenzoate. In particular, monobenzoates may include, but are not limited to, diethylene glycol monobenzoate, triethylene glycol monobenzoate, dipropylene glycol monobenzoate, and/or a combination of any two or more thereof.

In some aspects, the floor finish composition 204 includes at least one solvent. Suitable solvents may comprise polar organic solvents, nonpolar organic solvents, and aqueous solvents, such as water. In some aspects, the solvent content in the floor finish composition 204 ranges between 30% and 60% (w/w).

In some forms, the floor finish composition 204 may incorporate an aqueous solution, such as water and more particularly deionized water. In some aspects, the aqueous solution is present in the floor finish composition 204 in an amount of about 30% to about 50% (w/w). For example, the aqueous solution may be present in the floor finish composition 204 in an amount of 30% (w/w), or about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, or about 50% (w/w).

In some aspects, the floor finish composition 204 includes a polar organic solvent, such as diethylene glycol ethyl ether and propylene glycol propyl ether. The polar organic solvent may be present in the floor finish composition 204 in an amount between 0.1% and 15% (w/w). In some aspects, the polar organic solvent may be present in an amount of about 0.1% (w/w), or about 1%, about 2%, about 3%, about 4%, about 5%, about 6%, about 7%, about 8%, about 9%, about 10%, about 11%, about 12%, about 13%, about 14%, or about 15% (w/w).

Suitable polar organic solvents may include, but are not limited to glycol ether based solvents based on ethylene or propylene glycol such as ethylene glycol, propylene glycol, diethylene glycol ethyl ether, dipropylene glycol methyl ether, diethylene glycol methyl ether, diethylene glycol propyl ether, diethylene glycol butyl ether, ethylene/diethylene glycol 2-ethylhexyl ether, ethylene glycol phenyl ether, dipropylene glycol propyl ether, dipropylene glycol butyl ether, propylene glycol phenyl ether, and/or blends thereof. The hydrophobic glycol solvents may also include glycol ethers based on benzyl alcohols and/or other similar alcohols.

In one aspect, the nonpolar organic solvent is selected from nonpolar glycol solvents such as ethylene glycol phenyl ether and ethylene glycol hexyl ether. The nonpolar organic solvent may be present in the floor finish composition 204 in an amount between 0.1% and 15% (w/w). In some aspects, the polar organic solvent may be present in an amount of about 0.1% (w/w), or about 1%, about 2%, about 3%, about 4%, about 5%, about 6%, about 7%, about 8%, about 9%, about 10%, about 11%, about 12%, about 13%, about 14%, or about 15% (w/w).

Other suitable nonpolar organic solvents may include, but are not limited to phthalate-based solvents such as dibutyl phthalate, butyl benzyl phthalate, diethyl phthalate, and/or combinations thereof.

The floor finish composition 204 may further comprise at least one wax or wax emulsion. Suitable waxes include, without limitation, plant, e.g., vegetable, animal, insect, synthetic and/or mineral waxes. In some aspects, the wax is present in the floor finish composition 204 in an amount between about 0.1% and about 10% (w/w). In some aspects, the wax is present in an amount of about 0.1% (w/w), or about 1%, about 2%, about 3%, about 4%, about 5%, about 6%, about 7%, about 8%, about 9%, or about 10% (w/w).

Examples of commercially available waxes that may be used in the present disclosure include, but are not limited to non-ionic polypropylene emulsion - E-43 Wax (Michem 94340) by the Michelman company, high density polyethylene wax emulsion - AC-316 wax emulsion (MorFlo-WE30) by Omnova Solutions, and Syntran PA-1475 by Zschimmer & Schwarz. In one aspect, the wax or wax emulsion in present in the floor finish composition 204 in an amount between about 9% to about 11% based on percent solids.

In some aspects, the floor finish composition 204 includes at least one wetting agent. In some embodiments, the term "wetting agent" refers to a chemical that can be added to the composition to reduce its surface tension and, in some instances, make it more effective in spreading over surfaces.

In some aspects, the wetting agent is present in the floor finish composition in an amount between 0.001% and 1%, and more particularly between 0.01% and about 0.1% (w/w). In some aspects, the wetting agent is present in the floor finish composition in an amount of about 0.01% (w/w), or about 0.02%, about 0.03%, about 0.04%, about 0.05%, about 0.06%, about 0.07%, about 0.08%, about 0.09%, about 0.1%, about 0.5%, or about 1%.

Suitable wetting agents may include, but are not limited to surfactants or fluorosurfactants. The term "surfactant," as used herein, refers to a chemical compound that lowers the interfacial tension between two liquids. The surfactant may be a nonionic, anionic, cationic, and/or any other type of surfactant. Exemplary surfactants may include fluorosurfactants under the brand name Capstone^{®}, such as Capstone^{®} FS-60, Capstone^{®} FS-61, Capstone^{®} FS-64, Capstone^{®} FS-65, Capstone^{®} FS-34, and Capstone^{®} FS-35 available from DuPont^{™}.

The composition may further include an anti-foaming agent or a defoamer in an amount ranging from about 0.001% to about 1% and most preferably in an amount ranging from about 0.001% to about 0.01%. Suitable anti-foaming agents may include, but are not limited to insoluble oils, polydimethylsiloxanes emulsions and dispersions and other silicones, certain alcohols, stearates and glycols. Specifically, suitable anti-foaming agents may include Wacker Silfoam^{®} SE-21, SE-24, and SD-168 available from Wacker Chemie AG, BYK^{®} 024 available from BYK, and AGITAN^{®} 786 available from MÜNZING.

The composition may further include a fragrance in an amount ranging from about 0.001% to about 1% and most preferably in an amount ranging from about 0.001% to about 0.01%. The term "fragrance," as used herein, may generally refer to any water soluble fragrance substance or mixture of such substances including those which are naturally derived, for example, obtained by extraction of flower, herb, blossom or plant, those which are artificially derived or produced, for example, a mixture of natural oils and/or oil constituents, and those which are synthetically produced substances, for example, odiferous substances. Suitable fragrances may also include, without limitation, commercially available fragrances.

As previously mentioned, the floor finish composition 204, as disclosed herein, provides excellent abrasion resistance and/or chemical resistance, while simultaneously facilitating removability such that the floor finish composition 204 may be incorporated into the strip free process 300.

### Remover Solution:

In one aspect, the present disclosure provides a remover solution 206 for use in removing at least a portion of a coating or floor finish composition 206 from a substrate or surface. In some aspects, the remover solution 206 of the present disclosure provides a new paradigm of floor coating removal solutions that may be advantageously formulated to be non-corrosive and substantially free of volatile organic compounds without loss of efficacy. This is in contrast to conventional stripper or cleaning solutions that require a high volatile organic compound content (e.g., greater than 5%) and corrosive alkalinity (e.g., a pH greater than 11.5) to provide an effective activity in removing a floor coating.

The remover solution 206 of the present disclosure includes a first organic functional amine, a second organic functional amine and at least one surfactant. In some aspects, the remover solution 206 further comprises a fragrance, a pH adjuster, a dye, and an optional solvent. Among other things, the present disclosure encompasses the recognition that the organic functional amine and surfactant act synergistically to effectively remove at least a portion of a floor finish composition.

The organic functional amine in the remover solution 204 may assist in producing a desired pH or alkalinity suitable for removing at least a portion of the floor finish composition 204 from a substrate.

In some aspects, the organic functional amine is present in the remover solution 206 in an amount between about 10% and about 90% (w/w), and more particularly between about 40% and about 80%. In some aspects, the organic functional amine is present in the remover solution 206 in an amount of about 10%, or about 15%, about 20%, about 25%, about 30%, about 35%, about 40%, about 45%, about 50%, about 55%, about 60%, about 70%, about 75%, about 80%, about 85%, or about 90% (w/w). In one example, the one or more organic functional amine is present in an amount of about 65% (w/w), or about 66%, about 67%, about 68%, about 69%, about 70%, about 71%, about 72%, about 73%, about 74%, about 75%, about 76%, about 78%, about 79%, or about 80% (w/w).

The remover solution 206 includes a first organic functional amine and a second organic functional amine that act synergistically to improve efficacy of removing at least a portion of a floor finish composition or coating.

The first organic functional amine for use in the remover solution 206 is selected from branched or unbranched amino-C₁-C₆-alkoxy-C₁-C₆-alkanol, amino-C₁-C₆-alkylamino-C₁-C₆-alkanol, amino-C₁-C₆-alkanol, C₁-C₆-alkylamino-C₁-C₆-alkylalkanol, a 4- to 6-membered heterocycloalkyl that includes at least one nitrogen atom. Non-limiting examples of the first organic functional amine may include 2-(2-aminoethoxy)ethanol, ethanolamine, methylethanolamine, aminoethylpiperazine, aminoethylethanolamine, and ammonium.

The second organic functional amine is selected from branched or unbranched amino-C₁-C₃-alkoxy-C₁-C₃-alkanol, amino-C₁-C₃-alkylamino-C₁-C₃-alkanol, amino-C₁-C₃-alkanol, and a C₁-C₃-alkylamino-C₁-C₃-alkylalkanol. Non-limiting examples of the second organic functional amine may include monoisopropanolamine, diethanolamine, and triethanolamine.

In one non-limiting example, the first organic functional amine comprises 2-(2-aminoethoxy)ethanol (also known as diglycolamine) and the second organic functional amine comprises monoisopropanolamine.

In some aspects, the remover solution 206 includes a first organic functional amine and a second organic functional amine that may be present in a ratio to synergistically improve the efficacy of the remover solution 206. Suitable ratios of the first organic functional amine to the second organic functional amine may range between about 0.5 to 4. In some aspects, the ratio of first organic functional amine to second organic functional amine is about 0.5, or about 0.6, about 0.7, about 0.8, about 0.9, about 1, about 1.1, about 1.2, about 1.3, about 1.4, about 1.5, about 1.6, about 1.7, about 1.8, about 1.9, about 2.0, about 2.5, about 3, about 3.5, or about 4.

In one aspect, the first organic functional amine may be present in the remover solution 206 in an amount of about 35% to about 55% (w/w), and more particularly in an amount between 40% and 50% by weight of the remover solution. In some aspects, the first organic functional amine is present in the remover solution 206 in an amount of about 40% (w/w), or about 41%, about 42%, about 43%, about 44%, about 45%, about 46%, about 47%, about 48%, about 49%, or about 50%.

In one aspect, the second organic functional amine may be present in the remover solution 206 in an amount of about 20% to about 35% (w/w), and more particularly in an amount between 25% and 30% by weight of the remover solution 206. In some aspects, the second organic functional amine is present in the remover solution 206 in an amount of about 20% (w/w), or about 21%, about 22%, about 23%, about 24%, about 25%, about 26%, about 27%, about 28%, about 29%, or about 30% (w/w).

The remover solution 206 further includes a surfactant. In some aspects, the surfactant is present in the remover solution in an amount of about 0.1% to 30% (w/w), and more particularly between about 5% and about 25% (w/w). In some aspects, the surfactant is present in the remover solution 206 in an amount of about 0.1% (w/w), or about 1%, about 2%, about 3%, about 4%, about 5%, about 6%, about 7%, about 8%, about 9%, about 10%, about 11%, about 12%, about 13%, about 14%, about 15%, about 16%, about 17%, about 20%, about 21%, about 22%, about 23%, about 24%, or about 25% (w/w).

The surfactant has a formula (I):

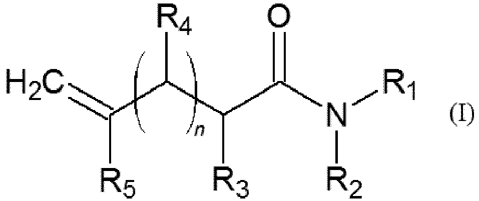

Wherein, n is an integer between 1 to 20, more particularly n may be an integer between 1 to 10, and even more particularly n may be 7. R₁ and R₂ are each independently selected from hydrogen, an alkyl moiety, an alkanol moiety, and an alkoxy-alkyl moiety, such as a branched or unbranched C₁-C₆-alkyl, C₁-C₆-alkanol, and C₁-C₆-alkoxy-C₁-C₃-alkyl. In some aspects, R₃, R₄, and R₅ are each independently selected from hydrogen, hydroxyl, C₁-C₆-alkyl, C₁-C₆-alkanol, and C₁-C₆-alkoxy-C₁-C₃-alkyl. In one non-limiting example, the surfactant of the remover solution 206 may comprise N,N-dimethyl-9-decenamide. In some aspects, the remover solution 206 may further comprise a second surfactant that may include, but is not limited to commercial surfactants such as a non-ionic surfactant having the formula RO(CH₂CH₂O)_{X}H wherein R = C₁₀H₂₁ and x = 7 commercially available as Lutensol XL 70 from BASF Corporation, TDA 8 ethoxylated isotridecanol, by BASF Corporation, Neodol 91-6 C₉₋₁₁ alcohol ethoxylate by Shell Global, and Hostapus SAS 30 sulfonic acids, C₁₀-C₁₈-Alkane, sodium salts by Nease Performance Chemicals. The total amount of surfactant in the remover solution 206 may be present in an amount of about 15% to about 35%, and more particularly in an amount between 20% and 30% by weight of the remover solution 206.

In some aspects, the remover solution 206 may advantageously include a low volatile organic compound (VOC) content. For example, the remover solution 206 may include a volatile organic compound (VOC) content of less than 3% (w/w), and more particularly a VOC content that is less than 2%, less than 1%, or less than 0.5% (w/w). In some embodiments, the remove solution 206 is free of or substantially free of solvents, such as organic solvents.

### Examples

The following examples set forth, in detail, ways in which the present disclosure may be used or implemented, and will enable one of ordinary skill in the art to more readily understand the principles thereof. The following examples are presented by way of illustration and are not meant to be limiting in any way.

### Example 1

Table 1 is a non-limiting example of a floor finish composition in accordance with the present disclosure:

**Table 1**

| **Example 1A - Floor Finish Composition** | | | |
|---|---|---|---|
| **Chemical Name** | **Percent Non-Volatile or Solids (%NV)** | **wt/wt%** | **solids** |
| Water | 0 | 35.834 | 0.0000 |
| Diethylene glycol ethyl ether (commercially available as Dow Carbitol) | 0 | 5.75 | 0.0000 |
| Propylene glycol n-propyl ether | 0 | 0.900 | 0.0000 |
| Tributoxyethyl phosphate | 100 | 1.000 | 1.0000 |
| Benzoate esters (commercially available as Benzoflex 2088) | 100 | 1.500 | 1.5000 |
| VOC-free, water-soluble, non-ionic fluorosurfactant (commercially available as Capstone FS-65) | 25 | 0.090 | 0.0225 |
| Acrylic Polymer Emulsion 1 (commercially available as Rhoplex 3392) | 38 | 42.458 | 16.1340 |
| Acrylic Polymer Emulsion 2 (commercially available as Rhoplex 1531C) | 38 | 2.961 | 1.1250 |
| Alkali soluble acrylic resin (commercially available as Joncryl ECO 75) | 33.5 | 1.343 | 0.4500 |
| Wax 1 - E-43 Wax (commercially available as Michem 94340) | 40 | 2.110 | 0.8438 |
| Wax 2 - AC-316 (commercially available as MorFlo-WE30) | 35 | 4.050 | 1.4175 |
| Ethylene glycol phenyl ether (commercially available as Dowanol EPH) | 0 | 1.000 | 0.0000 |
| Ethylene glycol hexyl ether (commercially available as Dowanol EH) | 0 | 0.800 | 0.0000 |
| Anti-foaming agent (commercially available as BYK 024) | 96 | 0.005 | 0.0048 |
| Fragrance | 100 | 0.200 | 0.2000 |
| | Total | 100.000 | 22.7000 |

In some aspects, the alkali soluble acrylic resin (Joncryl ECO 75) from Example 1A includes an acrylic resin having a molecular weight (Mw) of 5,700, an acid number of 222, a softening point of 141°C, and a glass transition temperature (Tg) of 103°C. Referring now to Table 2, a list of numerical entries are provided for the floor finish composition of Example 1A. The numerical entries include relative percentages, ratios, or proportions of particular chemicals in the respective composition, as listed below:

**Table 2**

| **Example 1A - Composition Properties** | |
|---|---|
| Total Solids without Fragrance | 22.50 |
| Water soluble Solvent on polymer solids (%) | 37.55 |
| Oil soluble Solvent on polymer solids (%) | 10.16 |
| Plasticizer on Total Solids (%) | 11.11 |
| Plasticizer on Total Polymer Solids (%) | 14.12 |
| Wax on Total Solids (%) | 10.05 |
| Polymer : Resin | 10 |
| Alkali soluble resin on Total Solids (%) | 7.00 |

Table 3 is a non-limiting example of a floor finish composition in accordance with the present disclosure:

**Table 3**

| **Example 1B - Floor Finish Composition** | | | |
|---|---|---|---|
| **Chemical Name** | **Percent Non-Volatile or Solids (%NV)** | **wt/wt%** | **solids** |
| Water | 0 | 39.302 | 0.00000 |
| Diethylene glycol ethyl ether (commercially available as Dow Carbitol) | 0 | 5.500 | 0.00000 |
| Ethylene glycol hexyl ether | 0 | 0.600 | 0.00000 |
| Ethylene glycol phenyl ether | 0 | 0.600 | 0.00000 |
| Trimethyl Pentanediol Diisobutyrate (TXIB) | 100 | 1.150 | 1.15000 |
| Tributoxyethyl phosphate (TBEP) | 100 | 1.250 | 1.25000 |
| Benzoate esters (commercially available as Benzoflex 2088) | 100 | 1.500 | 1.50000 |
| VOC-free, water-soluble, non-ionic fluorosurfactant (commercially available as Capstone FS-65) | 25 | 0.090 | 0.02250 |
| Acrylic Polymer Emulsion 1 (commercially available as Rhoplex 3392) | 38 | 34.964 | 13.28621 |
| Acrylic Polymer Emulsion 2 (Commercially available as Rhoplex 1531C) | 38 | 4.145 | 1.57500 |
| Alkali soluble acrylic resin (commercially available as Joncryl ECO 75) | 33.5 | 3.358 | 1.12500 |
| Wax - AC-316 (commercially available as MorFlo-WE30) | 35 | 7.391 | 2.58700 |
| Fragrance | 100 | 0.150 | 0.15000 |
| | Total | 100.000 | 22.6500 |

In some aspects, the alkali soluble acrylic resin (Joncryl ECO 75) from Example 1B includes an acrylic resin having a molecular weight (Mw) of 5,700, an acid number of 222, a softening point of 141°C, and a glass transition temperature (Tg) of 103°C. Referring now to Table 4, a list of numerical entries are provided for the floor finish composition of Example 1B. The numerical entries include relative percentages, ratios, or proportions of particular chemicals in the respective composition, as listed below:

**Table 4**

| **Example 1B - Composition Properties** | |
|---|---|
| Total Solids without Fragrance | 22.50 |
| Water soluble Solvent on polymer solids (%) | 34.40 |
| Oil soluble Solvent on polymer solids (%) | 7.51 |
| Plasticizer on Total Solids (%) | 17.34 |
| Plasticizer (on total polymer solids)% | 24.40 |
| Plasticizer (on emulsion polymer solids)% | 29.35 |
| Wax on Total Solids (%) | 11.50 |
| Polymer : Resin | 5 |
| Alkali soluble resin on Total Solids (%) | 12.00 |

Table 5 is a non-limiting example of a floor finish composition in accordance with the present disclosure:

**Table 5**

| **Example 1C - Floor Finish Composition** | | | |
|---|---|---|---|
| **Chemical Name** | **Percent Non-Volatile or Solids (%NV)** | **wt/wt%** | **solids** |
| Water | 0 | 39.302 | 0.00000 |
| Diethylene glycol ethyl ether (commercially available as Dow Carbitol) | 0 | 5.500 | 0.00000 |
| Ethylene glycol hexyl ether | 0 | 0.800 | 0.00000 |
| Dipropylene glycol methyl ether (DPM) | 0 | 0.500 | 0.00000 |
| Trimethyl Pentanediol Diisobutyrate (TXIB) | 100 | 1.150 | 1.15000 |
| Tributoxyethyl phosphate (TBEP) | 100 | 1.250 | 1.25000 |
| Benzoate esters (commercially available as Benzoflex 2088) | 100 | 1.500 | 1.50000 |
| VOC-free, water-soluble, non-ionic fluorosurfactant (commercially available as Capstone FS-65) | 25 | 0.090 | 0.02250 |
| Acrylic Polymer Emulsion 1 (commercially available as Rhoplex 3392) | 38 | 34.964 | 13.28621 |
| Acrylic Polymer Emulsion 2 (Commercially available as Rhoplex 1531C) | 38 | 4.145 | 1.57500 |
| Alkali soluble acrylic resin (commercially available as Joncryl ECO 75) | 33.5 | 3.358 | 1.12500 |
| Wax - AC-316 (commercially available as MorFlo-WE30) | 35 | 7.391 | 2.58700 |
| Fragrance | 100 | 0.150 | 0.15000 |
| | Total | 100.000 | 22.6500 |

In some aspects, the alkali soluble acrylic resin (Joncryl ECO 75) from Example 1C includes an acrylic resin having a molecular weight (Mw) of 5,700, an acid number of 222, a softening point of 141°C, and a glass transition temperature (Tg) of 103°C. Referring now to Table 6, a list of numerical entries are provided for the floor finish composition of Example 1C. The numerical entries include relative percentages, ratios, or proportions of particular chemicals in the respective composition, as listed below:

**Table 6**

| **Example 1C - Composition Properties** | |
|---|---|
| Total Solids without Fragrance | 22.50 |
| Water soluble Solvent on polymer solids (%) | 37.53 |
| Oil soluble Solvent on polymer solids (%) | 5 |
| Plasticizer on Total Solids (%) | 17.34 |
| Plasticizer (on total polymer solids)% | 24.40 |
| Plasticizer (on emulsion polymer solids)% | 29.35 |
| Wax on Total Solids (%) | 11.50 |
| Polymer : Resin | 5 |
| Alkali soluble resin on Total Solids (%) | 12.00 |

Table 7 is a non-limiting example of a floor finish composition in accordance with the present disclosure:

**Table 7**

| **Example 1D - Floor Finish Composition** | |
|---|---|
| **Chemical Name** | **wt/wt%** |
| Water or deionized water | 39.835 |
| Diethylene glycol ethyl ether (commercially available as Dow Carbitol) | 5.50 |
| Dipropylene glycol methyl ether (DPM) | 0.500 |
| Ethylene glycol n-hexyl ether | 0.800 |
| Tributoxyethyl phosphate | 1.150 |
| Benzoate esters (commercially available as Benzoflex 2088) | 1.500 |
| 2,2,4-trimethyl-1,,3-pentanediol diisobutyrate (commercially available as Kodaflex TXIB) | 1.250 |
| VOC-free, water-soluble, non-ionic fluorosurfactant (commercially available as Capstone FS-65) | 0.090 |
| Fragrance | 0.100 |
| Acrylic Polymer Emulsion (commercially available as Rhoplex 3392) | 34.964 |
| Alkali soluble acrylic resin 1 (commercially available as Rhoplex 1531C) | 4.145 |
| Alkali soluble acrylic resin 2(commercially available as Joncryl ECO 75) | 3.358 |
| Wax (commercially available as Syntran PA-1475) | 6.808 |
| | 100.000 |

Referring now to Table 8, a list of numerical entries are provided for the floor finish composition of Example 1D. The numerical entries include relative percentages, ratios, or proportions of particular chemicals in the respective composition, as listed below:

**Table 8**

| **Example 1D - Composition Properties** | |
|---|---|
| Total Solids without Fragrance | 22.50 |
| Appearance | White Opaque |
| Odor | Fruity, floral |
| pH | 8.15 |
| Specific Gravity | 1.035 |
| Weight per gallon | 8.62 |

### Example 2

A floor finish cleaner/remover solution was formulated as shown in Table 9. The floor finish cleaner/remover was a hazy single phase solution. The floor finish cleaner/remover does not separate into two phases upon mixture with water and allowed to stand. The floor finish cleaner/remover does not contain solvents. The floor finish cleaner/remover does not contain glycol ethers. The floor finish cleaner/remover does not contain ammonia. The floor finish cleaner/remover does not contain monoethanolamine. The floor finish cleaner/remover does not contain sodium hydroxide.

**Table 9**

| **Example 2A - Strip Free-Floor Finish Cleaner/Remover** | | |
|---|---|---|
| **Chemical Name** | **Percent Non-Volatile or Solids (%NV)** | **wt/wt%** |
| Water | 0 | 0.990 |
| 2-(2-aminoethoxy)ethanol (commercially available as diglycolamine) | 0 | 44.000 |
| monoisopropanolamine (MIPA) | 0 | 30.750 |
| N,N-dimethyl-9-decenamide (commercially available of Stepasol MET-10U) | 100 | 15.000 |
| Coconut fatty acid | 100 | 0.250 |
| RO(CH₂CH₂O)_{X}H wherein R = C₁₀H₂₁ and x = 7 (commercially available as Lutensol XL 70) | 100 | 8.500 |
| Brilliant Orange Dye | 100 | 0.010 |
| Fragrance | 0 | 0.500 |
| | Total | 100.000 |

Referring now to Table 10, a list of numerical entries are provided for the floor finish cleaner/remover solution of Example 2A:

**Table 10**

| **Example 2A - Composition Properties** | |
|---|---|
| Property: | Target: |
| Density (lbs/gal @23°C) | 8.312 |
| pH diluted 1:64 | 11.42 |
| Viscosity (cP) | 21.9 |
| Appearance | Orange/Clear |
| Appearance at dilution | Emulsion |
| Total Alkalinity (% Na₂O) | 13.4 |
| Free Alkalinity (%Na₂O) | 12.1 |

Another floor finish cleaner/remover solution was formulated as shown in Table 11. The floor finish cleaner/remover was a hazy single phase solution. The floor finish cleaner/remover does not separate into two phases upon mixture with water and allowed to stand. The floor finish cleaner/remover does not contain solvents.

**Table 11**

| **Example 2B - Strip Free-Floor Finish Cleaner/Remover** | | |
|---|---|---|
| **Chemical Name** | **Percent Non-Volatile or Solids (%NV)** | **wt/wt%** |
| Water or deionized water | 0 | 0.240 |
| 2-(2-aminoethoxy)ethanol (commercially available as diglycolamine) | 0 | 47.750 |
| monoisopropanolamine (MIPA) | 0 | 27.000 |
| N,N-dimethyl-9-decenamide (commercially available of Stepasol MET-10U) | 100 | 15.000 |
| Coconut fatty acid | 100 | 1.000 |
| RO(CH₂CH₂O)_{X}H wherein R = C₁₀H₂₁ and x = 7 (commercially available as Lutensol XL 70) | 100 | 8.500 |
| Brilliant Orange Dye | 100 | 0.010 |
| Fragrance | 0 | 0.500 |
| | Total | 100.000 |

Referring now to Table 12, a list of numerical entries are provided for the floor finish cleaner/remover solution of Example 2B:

**Table 12**

| **Example 2B - Composition Properties** | |
|---|---|
| Property: | Target: |
| Density (lbs/gal @23°C) | 8.26 |
| pH diluted 1:64 | 11.40 |
| Viscosity (cP) | 25.2 |
| Appearance | Orange/Clear |
| Appearance at dilution | Emulsion |
| Total Alkalinity (% Na₂O) | 13.29 |
| Free Alkalinity (%Na₂O) | 12.5 |

### Example 3

Based on testing of floor finishes comparable to the floor finishes of Examples 1A, 1B and 1C, we envision that four coats of any of the floor finishes of Examples 1A, 1B and 1C will have gloss parity to eight coats of a commercially available floor finish after ten burnishings of the floor finishes of Examples 1A, 1B and 1C over a ten week time period. Without intending to be bound by theory, it is believed that, among other things, alkali soluble acrylic resins such as the Joncryl^{®} ECO 75 used in the floor finishes of Examples 1A, 1B, 1C, and 1D improve removability while maintaining high performance of durability. Also, we envision that there is a relationship between the use of N,N-dimethyl-9-decenamide and 2-(2-aminoethoxy)ethanol in the floor finish cleaner/remover of Example 2 that provides the unexpected result of removing the floor finishes of Examples 1A, 1B and 1C.

The floor finishes of Examples 1A, 1B, 1C, and 1D showed good water, alcohol, peroxide, and quat disinfectant cleaner resistance.

The floor finishes of Examples 1A, 1B, 1C, and 1D are parity or better to commercially available floor cleaners in cleaning tests.

The floor finishes of Examples 1A, 1B, 1C, and 1D and the floor finish cleaner/remover of Example 2 are compatible with substrates such as vinyl composition tile, sheet vinyl, terrazzo, rubber, linoleum, honed marble or granite, and unglazed ceramic.

### Example 4

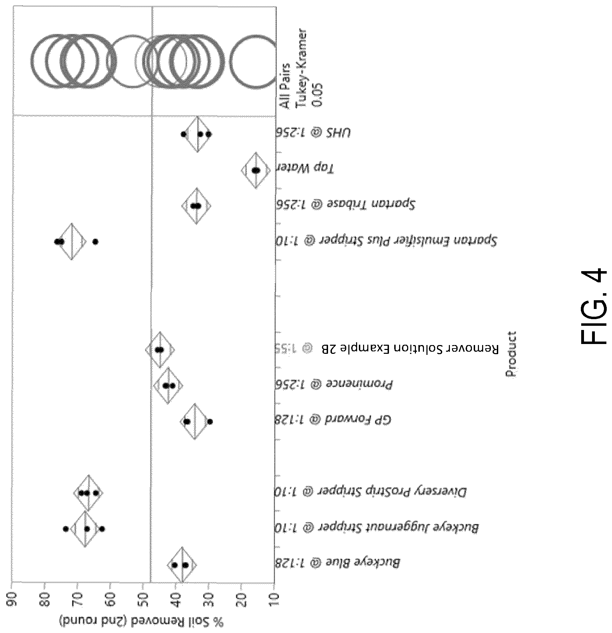

Floor finish cleaner/removers similar to Example 2 were formulated with varying levels of 2-amino-2-methyl-1-propanol containing 5% added water (AMP-95^{™}), monoisopropanolamine (MIPA), and 2-(2-aminoethoxy)ethanol (DGA) as shown in Figure 4. The alkaline cleaner/remover (diluted 1:64 with water ) is parity to stripper (diluted 1:48 with water) at removing four coats of finish and slightly downscale at removing ten coats of finish. If a formula to remove finish contains more than 3% VOC, based on California Air Resources Board (CARB) regulations, it is considered a "stripper." Referring to FIG. 4, the remover solution of Example 2B was compared to cleaner and stripper solutions using an urban soil test or cleaning test according to ASTM D4488 standard test. As shown in FIG. 4, the remover solution of Example 2B performs at an efficacy between a stripper and a cleaning solutions. Advantageously, the remover solution has a low VOC content and is non-corrosive at dilution.

### Example 5

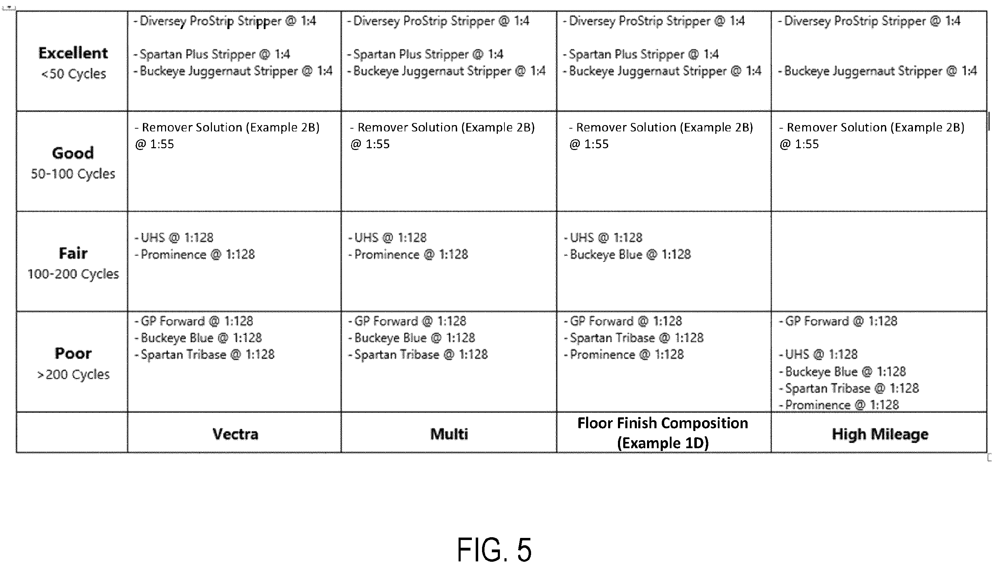

Referring to FIG. 5, the remover solution of Example 2B was compared to cleaner and stripper solutions using a modified long-term removability floor polish test according to a modified ASTM D1792 standard test. This test may be used to predict removability of floor polish after a treatment period that stimulates aging in the field. It allows for uniform mechanical and detergent action leaving the only variable the actual removability of the polish.

In the modified version of ASTM D1792 used herein, the dwell time of applying the remover/cleaner/stripper solution is reduced to 10 seconds from the standard one minute, 30 mL of solution is used in each test and the application pad is not soaked with the remover/cleaner/stripper solution, and the cure time is increased to 100 hours at 100 °F from the standard of 48 hours.

The remover solution of Example 2B at 1:55 dilution performs better on all tested floor finishes than all other floor cleaners tested, such as GP Forward at 1:128 dilution, Buckeye Blue at 1:128 dilution, Spartan Tribase at 1:128 dilution, UHS at 1:128 dilution, and Prominence at 1: 128 dilution.

## Claims

1. A remover solution for use in removing at least a portion of a coating from a surface, the solution comprising:
(a) a first organic functional amine and a second organic functional amine; and
(b) a surfactant having formula (I): 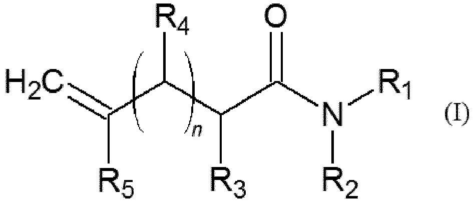 wherein:
n is 1 to 20;
R₁, R₂, R₃, R₄, and R₅ are each independently selected from hydrogen, alkyl, alkanol, and alkoxy-alkyl;
the first organic functional amine is selected from a branched or unbranched amino-C₁-C₆-alkoxy-C₁-C₆-alkanol, amino-C₁-C₆-alkylamino-C₁-C₆-alkanol, amino-C₁-C₆-alkanol, C₁-C₆-alkylamino-C₁-C₆-alkylalkanol, and a 4- to 6-membered heterocycloalkyl that includes at least one nitrogen atom; and
the second organic functional amine is selected from a branched or unbranched amino-C₁-C₃-alkoxy-C₁-C₃-alkanol, amino-C₁-C₃-alkylamino-C₁-C₃-alkanol, amino-C₁-C₃-alkanol, and a C₁-C₃-alkylamino-C₁-C₃-alkylalkanol.

2. The solution of claim 1, wherein the surfactant is present in the solution in an amount of 0.1% to 30% (w/w).

3. The solution of claim 1, wherein the solution is substantially free of volatile organic compounds.

4. The solution of claim 1, wherein the solution has less than 3% volatile organic compounds (w/w).

5. The solution of claim 1, wherein R₁ and R₂ are each independently selected from hydrogen, C₁-C₆-alkyl, C₁-C₆-alkanol, and C₁-C₆-alkoxy-C₁-C₃-alkyl.

6. The solution of claim 1, wherein R₃, R₄, and R₅ are each independently selected from hydrogen, hydroxyl, C₁-C₆-alkyl, C₁-C₆-alkanol, and C₁-C₆-alkoxy-C₁-C₃-alkyl.

7. The solution of claim 1, wherein the first organic functional amine is present in the solution in an amount of 35% to 55% (w/w).

8. The solution of claim 1, wherein the second organic functional amine is present in the solution in an amount of about 20% to about 35% (w/w).

9. A kit comprising the solution of claim 1, wherein the kit further includes an abrasive pad, a container configured to contain the remover solution of claim 1, and a container configured to contain a floor finish composition comprising at least one polymer emulsion, a first alkali soluble resin, and a second alkali soluble resin.

10. A method of removing a coating from a surface, the method comprising applying the remover solution according to any of claims 1 to 8 to the surface in an amount sufficient to remove at least a portion of the coating.

11. A method for maintaining and cleaning a floor finish composition on a substrate using a floor protection and cleaning system, the method comprising:
(a) conditioning and/or polishing a substrate;
(b) applying a floor finishing composition to coat at least a portion of the substrate;
(c) applying a remover solution to the floor finish composition and scrubbing the floor finish composition with a first abrasive pad to remove at least a portion of the floor finish composition; and
(d) cleaning the floor finish composition with a cleaning pad,
wherein the floor finish composition comprises at least one polymer emulsion, a first alkali soluble resin, and a second alkali soluble resin, wherein the at least one polymer emulsion and a total amount of alkali soluble resin are present in a ratio of polymer emulsion to total alkali soluble resin, and wherein the ratio is between about 2:1 and about 20:1, and
wherein the remover solution comprises at least one organic functional amine, and a surfactant having formula (I): 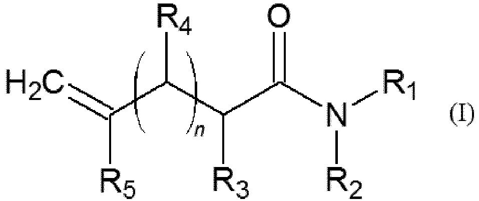 wherein:
n is 1 to 20;
R₁, R₂, R₃, R₄, and R₅ are each independently selected from hydrogen, alkyl, alkanol, and alkoxy-alkyl.

12. The method of claim 11, wherein:
- step (d) occurs for a duration sufficient to achieve a desired gloss on the floor finish composition; and/or
- prior to step (a) a stripper solution is applied once to remove an existing floor finish composition; and/or
- step (b) includes applying a plurality of coats of the floor finish composition to the substrate; and/or
- steps (c)-(d) are repeated a plurality of times.

13. The method of claim 11, wherein the cleaning pad is selected from the first abrasive pad or a second different abrasive pad.

## Patentansprüche

1. Eine Entfernerlösung zur Verwendung bei der Entfernung mindestens eines Abschnitts einer Beschichtung von einer Oberfläche, wobei die Lösung Folgendes beinhaltet:
(a) ein erstes organisches funktionelles Amin und ein zweites organisches funktionelles Amin; und
(b) ein Tensid mit der Formel (I): 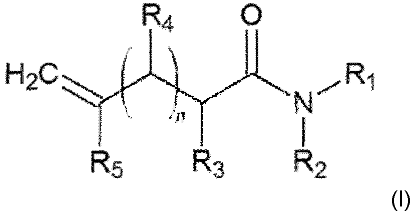 wobei:
n 1 bis 20 ist;
R₁, R₂, R₃, R₄ und R₅ jeweils unabhängig aus Wasserstoff, Alkyl, Alkanol und Alkoxyalkyl ausgewählt sind;
das erste organische funktionelle Amin ausgewählt ist aus einem verzweigten oder nicht verzweigten Amino-C₁-C₆-alkoxy-C₁-C₆-alkanol, Amino-C₁-C₆-alkylamino-C₁-C₆-alkanol, Amino-C₁-C₆-alkanol, C₁-C₆-Alkylamino-C₁-C₆-alkylalkanol und einem 4-bis 6-gegliederten Heterocycloalkyl, das mindestens ein Stickstoffatom umfasst; und
das zweite organische funktionelle Amin ausgewählt ist aus einem verzweigten oder nicht verzweigten Amino-C₁-C₃-alkoxy-C₁-C₃-alkanol, Amino-C₁-C₃-alkylamino-C₁-C₃-alkanol, Amino-C₁-C₃-alkanol und einem C₁-C₃-Alkylamino-C₁-C₃-alkylalkanol.

2. Lösung gemäß Anspruch 1, wobei das Tensid in der Lösung in einer Menge von 0,1 % bis 30 % (Gew./Gew.) vorhanden ist.

3. Lösung gemäß Anspruch 1, wobei die Lösung im Wesentlichen frei von flüchtigen organischen Verbindungen ist.

4. Lösung gemäß Anspruch 1, wobei die Lösung zu weniger als 3 % flüchtige organische Verbindungen (Gew./Gew.) aufweist.

5. Lösung gemäß Anspruch 1, wobei R₁ und R₂ jeweils unabhängig ausgewählt sind aus Wasserstoff, C₁-C₆-Alkyl, C₁-C₆-Alkanol und C₁-C₆-Alkoxy-C₁-C₃-alkyl.

6. Lösung gemäß Anspruch 1, wobei R₃, R₄ und R₅ jeweils unabhängig ausgewählt sind aus Wasserstoff, Hydroxyl, C₁-C₆-Alkyl, C₁-C₆-Alkanol und C₁-C₆-Alkoxy-C₁-C₃-alkyl.

7. Lösung gemäß Anspruch 1, wobei das erste organische funktionelle Amin in der Lösung in einer Menge von 35 % bis 55 % (Gew./Gew.) vorhanden ist.

8. Lösung gemäß Anspruch 1, wobei das zweite organische funktionelle Amin in der Lösung in einer Menge von etwa 20 % bis 35 % (Gew./Gew.) vorhanden ist.

9. Ein Kit, das die Lösung aus Anspruch 1 beinhaltet, wobei das Kit ferner einen Schleifpad, einen zum Enthalten der Entfernerlösung aus Anspruch 1 konfigurierten Behälter und einen zum Enthalten einer Bodenbelagszusammensetzung konfigurierten Behälter umfasst, beinhaltend mindestens eine Polymeremulsion, ein erstes lösliches Alkakiharz und ein zweites lösliches Alkaliharz.

10. Ein Verfahren zum Entfernen einer Beschichtung von einer Oberfläche, wobei das Verfahren das Aufbringen der Entfernerlösung gemäß einem der Ansprüche 1 bis 8 auf die Oberfläche in einer Menge beinhaltet, die ausreichend ist, um mindestens einen Abschnitt der Beschichtung zu entfernen.

11. Ein Verfahren zum Halten und Reinigen einer Bodenbelagszusammensetzung auf einem Substrat unter Verwendung eines Bodenschutz- und -reinigungssystems, wobei das Verfahren Folgendes beinhaltet:
(a) Konditionieren und/oder Polieren eines Substrats;
(b) Aufbringen einer Bodenbelagszusammensetzung, um mindestens einen Abschnitt des Substrats zu beschichten;
(c) Aufbringen einer Entfernerlösung auf die Bodenbelagszusammensetzung und Schrubben der Bodenbelagszusammensetzung mit einem ersten Schleifpad, um mindestens einen Abschnitt der Bodenbelagszusammensetzung zu entfernen; und
(d) Reinigen der Bodenbelagszusammensetzung mit einem Reinigungspad, wobei die Bodenbelagszusammensetzung mindestens eine Polymeremulsion, ein erstes alkalilösliches Harz und ein zweites alkalilösliches Harz beinhaltet, wobei die mindestens eine Polymeremulsion und eine Gesamtmenge des alkalilöslichen Harzes in einem Verhältnis von Polymeremulsion zu gesamtem alkalilöslichen Harz vorhanden sind, und wobei das Verhältnis zwischen etwa 2 : 1 und etwa 20 : 1 liegt, und wobei die Entfernerlösung mindestens ein organisches funktionelles Amin und ein Tensid mit der Formel (I) beinhaltet: 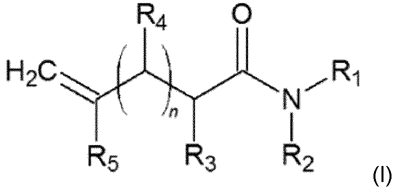 wobei:
n 1 bis 20 ist;
R₁, R₂, R₃, R₄ und R₅ jeweils unabhängig aus Wasserstoff, Alkyl, Alkanol und
Alkoxyalkyl ausgewählt sind.

12. Verfahren gemäß Anspruch 11, wobei:
- Schritt (d) für eine Dauer stattfindet, die ausreicht, um einen erwünschten Glanz auf der Bodenbelagszusammensetzung zu erzielen; und/oder
- vor Schritt (a) eine Stripperlösung einmal aufgebracht wird, um eine bereits vorhandene Bodenbelagszusammensetzung zu entfernen; und/oder
- Schritt (b) das Aufbringen einer Vielzahl von Beschichtungen der Bodenbelagszusammensetzung auf das Substrat umfasst; und/oder
- die Schritte (c)-(d) mehrmals wiederholt werden.

13. Verfahren gemäß Anspruch 11, wobei das Reinigungspad aus dem ersten Schleifpad und einem zweiten anderen Schleifpad ausgewählt ist.

## Revendications

1. Une solution d'agent d'élimination destinée à être utilisée pour éliminer au moins une portion d'un enduit d'une surface, la solution comprenant :
(a) une première amine fonctionnelle organique et une deuxième amine fonctionnelle organique ; et
(b) un agent tensioactif ayant la formule (I) : 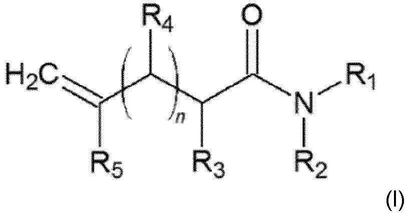 dans laquelle :
n vaut de 1 à 20 ;
R₁, R₂, R₃, R₄, et R₅ sont chacun indépendamment sélectionnés parmi l'hydrogène, un alkyle, un alcanol, et un alcoxyalkyle ;
la première amine fonctionnelle organique est sélectionnée parmi un amino-(alcoxy en C₁ à C₆)-(alcanol en C₁ à C₆), amino-(alkylamino en C₁ à C₆)-(alcanol en C₁ à C₆), amino-(alcanol en C₁ à C₆), (alkylamino en C₁ à C₆)-(alkylalcanol en C₁ à C₆) ramifié ou non ramifié, et un hétérocycloalkyle à 4 à 6 chaînons qui inclut au moins un atome d'azote ; et
la deuxième amine fonctionnelle organique est sélectionnée parmi un amino-(alcoxy en C₁ à C₃)-(alcanol en C₁ à C₃), amino-(alkylamino en C₁ à C₃)-(alcanol en C₁ à C₃), amino-(alcanol en C₁ à C₃) ramifié ou non ramifié, et un (alkylamino en C₁ à C₃)-(alkylalcanol en C₁ à C₃).

2. La solution de la revendication 1, dans laquelle l'agent tensioactif est présent dans la solution dans une quantité allant de 0,1 % à 30 % (p/p).

3. La solution de la revendication 1, la solution étant substantiellement exempte de composés organiques volatils.

4. La solution de la revendication 1, la solution ayant moins de 3 % de composés organiques volatils (p/p).

5. La solution de la revendication 1, dans laquelle R₁ et R₂ sont chacun indépendamment sélectionnés parmi l'hydrogène, un alkyle en C₁ à C₆, un alcanol en C₁ à C₆, et un (alcoxy en C₁ à C₆)-(alkyle en C₁ à C₃).

6. La solution de la revendication 1, dans laquelle R₃, R₄, et R₅ sont chacun indépendamment sélectionnés parmi l'hydrogène, un hydroxyle, un alkyle en C₁ à C₆, un alcanol en C₁ à C₆, et un (alcoxy en C₁ à C₆)-(alkyle en C₁ à C₃).

7. La solution de la revendication 1, dans laquelle la première amine fonctionnelle organique est présente dans la solution dans une quantité allant de 35 % à 55 % (p/p).

8. La solution de la revendication 1, dans laquelle la deuxième amine fonctionnelle organique est présente dans la solution dans une quantité allant d'environ 20 % à environ 35 % (p/p).

9. Un kit comprenant la solution de la revendication 1, le kit incluant en outre un tampon abrasif, un contenant configuré pour contenir la solution d'agent d'élimination de la revendication 1, et un contenant configuré pour contenir une composition de finition pour sols comprenant au moins une émulsion de polymère, une première résine soluble dans les alcalis, et une deuxième résine soluble dans les alcalis.

10. Un procédé consistant à éliminer un enduit d'une surface, le procédé comprenant le fait d'appliquer la solution d'agent d'élimination selon n'importe lesquelles des revendications 1 à 8 sur la surface dans une quantité suffisante pour éliminer au moins une portion de l'enduit.

11. Un procédé pour entretenir et nettoyer une composition de finition pour sols sur un substrat à l'aide d'un système de protection et de nettoyage pour sols, le procédé comprenant :
(a) le fait de conditionner et/ou de polir un substrat ;
(b) le fait d'appliquer une composition de finition pour sols afin d'enduire au moins une portion du substrat ;
(c) le fait d'appliquer une solution d'agent d'élimination sur la composition de finition pour sols et de frotter la composition de finition pour sols avec un premier tampon abrasif afin d'éliminer au moins une portion de la composition de finition pour sols ; et
(d) le fait de nettoyer la composition de finition pour sols avec un tampon de nettoyage,
dans lequel la composition de finition pour sols comprend au moins une émulsion de polymère, une première résine soluble dans les alcalis, et une deuxième résine soluble dans les alcalis, l'au moins une émulsion de polymère et une quantité totale de résine soluble dans les alcalis étant présentes dans un rapport d'émulsion de polymère à résine soluble dans les alcalis totale, et le rapport étant compris entre environ 2/1 et environ 20/1, et
dans lequel la solution d'agent d'élimination comprend au moins une amine fonctionnelle organique, et un agent tensioactif ayant la formule (I) : 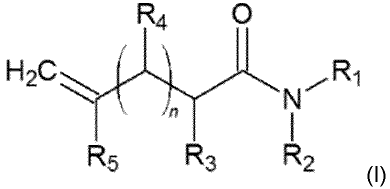 dans laquelle :
n vaut de 1 à 20 ;
R₁, R₂, R₃, R₄, et R₅ sont chacun indépendamment sélectionnés parmi l'hydrogène, un alkyle, un alcanol, et un alcoxyalkyle.

12. Le procédé de la revendication 11, dans lequel :
- l'étape (d) se déroule pendant une durée suffisante pour atteindre un lustre souhaité sur la composition de finition pour sols ; et/ou
- préalablement à l'étape (a), une solution d'agent décapant est appliquée une fois afin d'éliminer une composition de finition pour sols existante ; et/ou
- l'étape (b) inclut le fait d'appliquer une pluralité de couches d'enduction de la composition de finition pour sols sur le substrat ; et/ou
- les étapes (c) à (d) sont répétées une pluralité de fois.

13. Le procédé de la revendication 11, dans lequel le tampon de nettoyage est sélectionné parmi le premier tampon abrasif ou un deuxième tampon abrasif différent.
